# EUROPÄISCHE PATENTSCHRIFT

(11) **EP 1 569 735 B1**
(45) Veröffentlichungstag und Bekanntmachung des Hinweises auf die Patenterteilung: **08.09.2010**
(21) Anmeldenummer: 03765025.6
(22) Anmeldetag: 17.07.2003
(51) Int. Cl.: B01D 46/52, B01D 35/06, B01D 46/24, B01D 29/21

(54) **ABSCHEIDER ZUR REININGUNG EINES FLUIDSTROMES**
SEPARATOR FOR PURIFYING A FLUID FLOW
SEPARATEUR DESTINE A PURIFIER UN COURANT DE FLUIDE

(30) Priorität: 20.07.2002 DE 10233012
(43) Veröffentlichungstag der Anmeldung: 07.09.2005
(73) Patentinhaber: MANN+HUMMEL GmbH, 71638 Ludwigsburg (DE)
(72) Erfinder: GILLENBERG, Eric, 67346 Speyer (DE); HEIKAMP, Wolfgang, 67165 Waldsee (DE); HIRSCH, Melanie, 67346 Speyer (DE); WINTER, Hans-Michael, 67373 Dudenhofen (DE)
(74) Vertreter: Voth, Gerhard
(86) Internationale Anmeldenummer: PCT/EP2003/007783
(87) Internationale Veröffentlichungsnummer: WO 2004/009215

(56) Entgegenhaltungen:
- EP-B- 0 840 644
- WO-A-01/37969
- DE-C- 3 325 526
- US-A- 4 999 108

## Beschreibung

Die Erfindung betrifft einen Abscheider zur Reinigung eines Fluidstromes gemäß dem Oberbegriff des Patentanspruches 1. Außerdem betrifft die Erfindung eine Abscheidevorrichtung gemäß Patentanspruch 9, in welche der o.g. Abscheider integriert ist.

Es ist aus der EP 0 840 644 ein Abscheider bekannt, welcher Verunreinigungen aus einem Fluid herausfiltert. Der Abscheider verfügt über ein Filtermedium und Endkappen, welche mit dem Filtermedium verbunden sind. Weiterhin ist um das Filtermedium ein perforiertes, elektrisch leitfähiges Rohr angeordnet. Die Verbindung zwischen den Endkappen und dem Filtermedium bzw. dem Rohr ist durch einen elektrisch leitfähigen Kleber hergestellt.

Nachteilig bei dem beschriebenen Abscheider ist, dass der Kleber im Laufe der Einsatzzeit altert und seine elektrische Leitfähigkeit sehr stark abnimmt, wodurch die elektrostatische Aufladung des Filtermediums nicht abgeleitet wird und sich das Filtermedium auflädt. Die elektrostatische Aufladung des Filtermediums kann zu unkontrollierten Entladungen führen, wodurch ein Ölnebel/Luft-Gemisch oder im Extremfall eine Flüssigkeit entzündet werden kann.

Aus der DE 3325526 C ist eine elektrisch leitfähige Filterpatrone bekannt, die aus einem gelochten Innen-, Mittel- und Außenrohr besteht. Zwischen diesen Rohren befinden sich Filterschichten und an den Rohrenden angeklebten Patronen-Endscheiben. Die Rohre, und die Endscheiben sind aus Metall und das innere Rohr ist mit einer der Endscheiben metallisch fest verbunden. Die Rohre sind an mindestens einem ihrer Enden von einer zwischen ihnen angeordneten elektrisch leitfähigen in radialer Richtung wirkenden Feder kontaktiert. Eine sichere Kontaktierung des Filtermediums durch den Kontaktstreifens ist nicht beschrieben.

Die Aufgabe der Erfindung besteht darin, die o.g. Nachteile zu vermeiden. Diese Aufgabe wird durch die Merkmale des Patentanspruches 1 gelöst.

Der erfindungsgemäße Abscheider dient zur Reinigung eines Fluidstromes, wobei der Abscheider vorzugsweise zur Entölung von Kompressorluft eingesetzt werden kann. Der erfindungsgemäße Abscheider verfügt über ein Filtermedium z. B. Glasfaserpapier , welches derart ausgebildet ist, dass Verunreinigungen wie z.B. Staub, Sand, Wasser oder Öl aus dem Fluidstrom entfernt werden können. Das Filtermedium ist mit einer elektrisch leitfähigen Endkappe dichtend verbunden, damit kein ungereinigtes Fluid zwischen der Endkappe und dem Filtermedium hindurchströmen kann. Das Filtermedium ist bei vorteilhaften Ausgestaltungen ringförmig zusammengeschlossen, wobei der ringförmige Zusammenschluss ein beliebiges Volumen umschließen kann und nicht auf kreisringförmige Zusammenschlüsse beschränkt ist. Alternative ringförmige Zusammenschlüsse können z.B. oval ausgebildet sein. Bei ringförmig zusammengeschlossenen Filtermedien ist es vorteilhaft, wenn an ihren beiden Stirnseiten jeweils eine Endkappe angeordnet ist. Damit sich das Filtermedium durch das hindurchströmende Fluid nicht elektrostatisch aufladen kann, ist das Filtermedium über einen elektrisch leitfähigen Kontaktstreifen mit der Endkappe verbunden. Der elektrisch leitfähige Kontaktstreifen ist derart ausgebildet, dass eine zuverlässige elektrisch leitfähige Verbindung zwischen dem Filtermedium und der Endkappe gebildet wird. Hierzu weist der Kontaktstreifen ein elektrisch leitfähiges Material wie z.B. Kupfer, Federstahl oder Edelstahl auf, wobei der Kontaktstreifen als Band mit einer konstanten Breite aus einem Blech geschnitten bzw. gestanzt und in Form gebogen sein kann oder über variable Breiten verfügen kann. Der Kontaktstreifen verfügt über Kontaktflächen, welche mit dem Filtermedium und der Endkappe in flächigem, über mehrere mm² großen Kontakt stehen und nicht nur punktuelle Berührungspunkte besitzen. Der Kontaktstreifen kann über eine teilweise Ummantelung aus z.B. Kunststoff verfügen, wobei jedoch die Kontaktflächen nicht ummantelt sind. Durch die Verwendung des Kontaktstreifens zur elektrisch leitfähigen Verbindung des Filtermediums mit der Endkappe ist eine zuverlässige Erdung des Filtermediums zu erzielen, da der Kontaktstreifen seine elektrischen Eigenschaften auch bei längerer Einsatzdauer nicht wesentlich verändert.

Gemäß einer vorteilhaften Ausgestaltung weist der Abscheider ein Filtermedium mit mehreren Filterlagen auf, wobei alle Filterlagen mit dem Kontaktstreifen in Kontakt stehen. Die einzelnen Filterlagen des Filtermediums können über unterschiedliche Materialien verfügen und auch unterschiedliche Filtrationseigenschaften aufweisen. Hierbei kann z.B. die in Durchströmungsrichtung oberste Filterlage eine gröbere Filterfeinheit aufweisen, als die unterhalb angeordneten Filterlagen. Dadurch werden bessere Filtrationsergebnisse erzielt. Da alle Filterlagen über den Kontaktstreifen mit der Endkappe verbunden sind, kann sich keine der Filterlagen elektrostatisch aufladen.

Gemäß einer Weiterbildung der Erfindung verfügt der Abscheider über einen Stützkörper aus z.B. Metall, welcher durch den Kontaktstreifen elektrisch leitend mit der Endkappe verbunden ist. Der Stützkörper ist bei diversen Ausführungsformen kürzer als das Filtermedium ausgeführt. Dies ist insbesondere dann von Vorteil, wenn das Filtermedium bereits auf dem Stützkörper angeordnet ist und anschließend mit einem Messer oder einer anderen Abtrennvorrichtung abgelängt wird. Hierbei wird verhindert, dass das Messer beim Ablängen des Filtermediums mit dem Stützkörper in Kontakt kommt und beschädigt wird. Durch die kürzere Ausführung des Stützkörpers im Vergleich zu dem Filtermedium kontaktiert der Stützkörper die Endkappe nicht direkt, wodurch kein elektrischer Kontakt zwischen der Endkappe und dem Stützrohr besteht und sich das Stützrohr elektrostatisch aufladen kann. Durch die Verwendung des Kontaktstreifens wird das Stützrohr mit der Endkappe elektrisch leitend verbunden, wodurch die elektrostatische Aufladung des Stützrohres verhindert wird.

Es ist vorteilhaft, wenn der Kontaktstreifen über winklig zueinander angeordnete Schenkel verfügt, welche einen federnden Toleranzausgleich bewirken. Hierbei können die Schenkel beliebig ausgebildet sein, wobei sie z.B. rechteckig, schwalbenschwanzförmig oder trapezförmig ausgebildet sein können. Der Kontaktstreifen besteht aus einem Material, welches über eine ausreichende Elastizität verfügt, um eine definierte Vorspannung aufzubringen. Die Vorspannung hält den Kontaktstreifen auch bei Vibrationen, welche z.B. bei Kraftfahrzeugen auftreten, in einem sicheren Kontakt zu dem Filtermedium. Der federnde Toleranzausgleich hat den Vorteil, dass das Filtermedium, welches in seiner Dicke variieren kann, sicher kontaktiert ist. Hierbei ist es vorteilhaft, wenn der Kontaktstreifen die Form eines, im Spitzenbereich einer Ecke offenen Dreiecks aufweist. Der Kontaktstreifen kann im Bereich der offenen Ecke auf das Filtermedium aufgesteckt werden, wobei die Schenkel, welche winklig aufeinander zulaufen, für die Montage etwas aufgebogen werden können und anschließend durch die Elastizität des Materials wieder zusammenfedern und an das Filtermedium anliegen. Der untere Bereich des Dreiecks, an welchen beide Schenkel anschließen kann als Kontaktfläche des Kontaktstreifens zu der Endkappe genutzt werden.

Gemäß einer Weiterbildung der Erfindung ist der Kontaktstreifen an mehreren Kontaktflächen mit dem Filtermedium und der Endkappe kontaktiert. Hierbei können sowohl die Schenkel, als auch der Bereich, in welchem die Schenkel miteinander verbunden sind, Zacken oder Wellen aufweisen, wodurch mehrere Kontaktfläche zwischen dem Filtermedium bzw. der Endkappe und dem Kontaktstreifen erzeugt werden. Dies ist vorteilhaft, da, falls der elektrische Kontakt zwischen einer der Kontaktstellen unterbrochen ist, der Kontakt an einer anderen Stelle aufrechterhalten wird und so die elektrostatische Aufladung verhindert wird.

Eine vorteilhafte Ausgestaltung der Erfindung sieht vor, dass der Kontaktstreifen w-förmig ausgebildet ist, wobei das Filtermedium zwischen den Schenkeln eingeklemmt ist. Durch die w-förmige Ausgestaltung des Kontaktstreifens kann der Kontaktstreifen über eine ausreichende Vorspannung verfügen welche eine zuverlässige Kontaktierung des Filtermediums und der Endkappe ermöglicht.

Gemäß einer alternativen Ausführung der Erfindung ist der Kontaktstreifen wurzelzeichenförmig ausgestaltet, wobei die Schenkel vorzugsweise zwischen das Filtermedium und das Stützrohr eingeklemmt sind. Bei dieser Ausführung verfügt der Kontaktstreifen neben den federnden Schenkeln über Kontaktflächen, welche über eine größere Fläche den Kontakt herstellen.

Eine weitere Ausgestaltung der Erfindung sieht vor, dass der Kontaktstreifen über eine ringförmige Scheibe verfügt, wobei die Schenkel aus der Scheibe herausragen. Bei dieser Ausgestaltung können die Schenkel auf die ringförmige Scheibe, welche aus einem elektrisch leitfähigen Material besteht, durch z.B. Nieten, Schauben oder Schweißen aufgebracht werden, oder aus der Scheibe herausgebogen sein. Dadurch verfügt der Kontaktstreifen über eine großflächige Kontaktfläche zwischen dem Kontaktstreifen und der Endkappe.

Die erfindungsgemäße Abscheidevorrichtung, welche zur Reinigung eines Fluidstromes, insbesondere zur Entölung von Kompressorluft vorgesehen ist, weist ein Gehäuse auf. Das Gehäuse kann aus einem oder mehreren Teilen bestehen, wobei ein Einlass und ein Auslass vorgesehen ist. In dem Gehäuse ist ein Abscheider gemäß der vorangehenden Beschreibung angeordnet, wobei der Abscheider den Einlass dichtend von dem Auslass trennt.

Gemäß einer Weiterbildung der Erfindung ist das Gehäuse elektrisch leitend mit dem Abscheider verbunden, wobei die elektrisch leitende Verbindung vorzugsweise zwischen der Endkappe des Abscheiders und dem Gehäuse gebildet ist. Dadurch wird die elektrostatische Aufladung des Abscheiders verhindert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: einen Abscheider im Halbschnitt,
- Figur 2: einen Abscheider gemäß Figur 1 in Explosionsdarstellung im Schnitt,
- Figur 3: einen Ausschnitt Z gemäß Figur 1 im Schnitt,
- Figur 4: einen Ausschnitt Y gemäß Figur 1 im Schnitt,
- Figur 5: einen Ausschnitt Y gemäß Figur 1 im Schnitt,
- Figur 6: einen Kontaktstreifen im Schnitt,
- Figur 7: einen Kontaktstreifen im Schnitt und
- Figur 8: eine Abscheidevorrichtung im Halbschnitt.

### Beschreibung der Ausführungsbeispiele

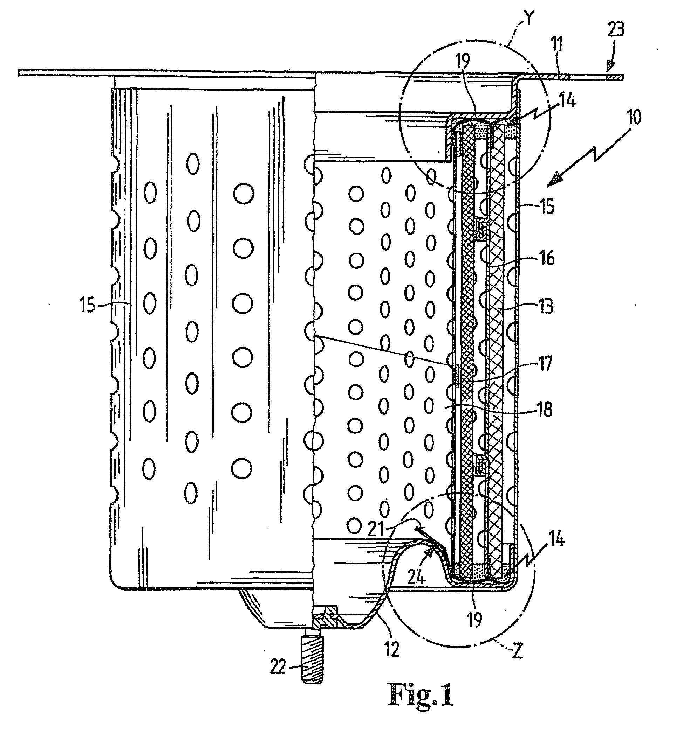

In Figur 1 ist ein Abscheider 10 im Halbschnitt dargestellt, wobei der Abscheider 10 als Luftentölelement, insbesondere für Druckluftanlagen in Kraftfahrzeugen, ausgeführt ist. Der Abscheider 10 weist eine erste Endkappe 11, eine zweite Endkappe 12 und ein Filtermedium 13 auf. Das Filtermedium 13, welches ringförmig zusammengeschlossen ist, ist an seinen Stirnseiten 14 mit den beiden Endkappen 11, 12 verklebt. Bei diesem Ausführungsbeispiel ist das Filtermedium ein Glasfaserpapier. Die zweite Endkappe 12 verfügt über einen Befestigungsbolzen 22, welcher in ein, den Abscheider 10 aufnehmendes Gehäuse gemäß Figur 9 eingeschraubt werden kann. Die erste Endkappe 11 verfügt über einen Flanschbereich 23 welcher mit dem Gehäuse gemäß Figur 9 korrespondiert und so die Lage des Abscheiders 10 fixiert. Um das Filtermedium 13 vor Beschädigungen zu schützen, ist ein gelochtes Schutzrohr 15 um das Filtermedium 13 angeordnet. Das Schutzrohr 15 ist auf die erste und zweite Endkappe 11, 12 aufgesteckt, wobei das Schutzrohr 15 teilweise um die zweite Endkappe 12 gebogen ist. Innerhalb des Filtermediums 13 ist ein Stützrohr 16 angeordnet, welches etwas kürzer als das Filtermedium 13 ausgeführt ist und ein Einknicken des Filtermediums 13 verhindert. Das Stützrohr 16 besteht aus einem spiralförmig zusammen gebörteltem Metallband, welches über Durchbrüche verfügt, damit das Fluid hindurchströmen kann. Innerhalb des Stützrohres 16 ist ein Feinfiltermedium 17, wie z.B. Polyestervlies angeordnet, welches feinere, von dem Filtermedium 13 nicht aus dem Fluid entfernte Verunreinigungen entfernt. Bei Luftentölelementen ist das Feinfiltermedium 17 ein offenes Vlies, welches größere Tropfen, die im Filtermedium 13 durch Koaleszenz entstanden sind, auffangen und nach unten ableiten. Somit ist das Feinfiltermedium 17 bei Luftentölelementen ein Nachabscheider. Um das Feinfiltermedium 17 vor Beschädigungen bei der Montage zu schützen, ist ein perforiertes Innenrohr 18 vorgesehen, welches innerhalb des Feinfiltermedium 17 angeordnet ist, wobei das Innenrohr 18 bezogen auf das Feinfiltermedium 18 etwas kürzer ausgeführt ist. Die Rohre 15, 16, 18 verfügen gemäß diesem Ausführungsbeispiel über kreisförmige Löcher, welche bei anderen Ausführungen selbstverständlich über andere Geometrien wie z.B. als Schlitze oder Dreiecke verfügen können, durch welche das Fluid hindurch treten kann.

Zwischen dem Filtermedium 13 und dem Stützrohr 16 ist im Bereich der Stirnseiten 14 ein Kontaktstreifen 19 angeordnet, welcher wurzelzeichenförmig ausgestaltet ist.

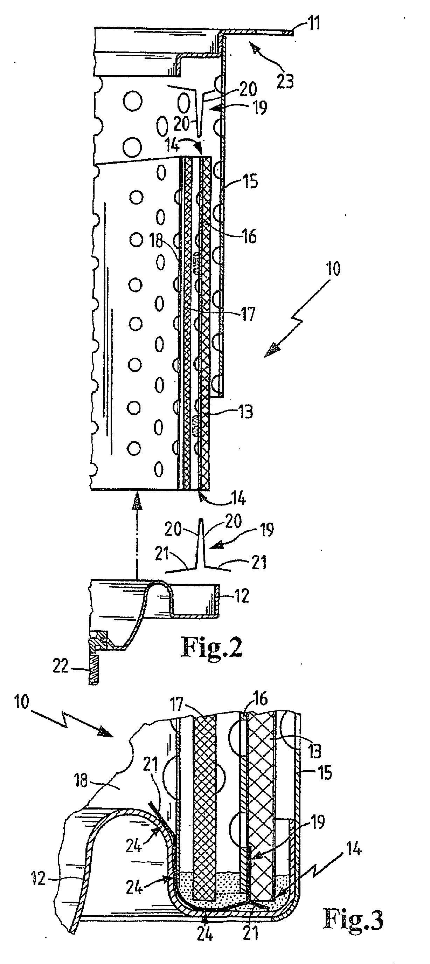

In Figur 2 ist ein Abscheider 10 gemäß Figur 1 in Explosionsdarstellung im Schnitt dargestellt. Der Figur 1 entsprechende Bauteile sind mit gleichen Bezugszeichen versehen. Bei dieser Darstellung ist zu erkennen, dass der wurzelzeichenförmige Kontaktstreifen 19 über winklig zueinander angeordnete Schenkel 20 verfügt, welche gemäß Figur 1 bzw. 3 zwischen das Stützrohr 16 und das Filtermedium 13 gesteckt werden. Die Schenkel 20 schließen an Kontaktbereiche 21 an.

In Figur 3 ist ein Ausschnitt Z gemäß Figur 1 dargestellt. Der Figur 1 entsprechende Bauteile sind mit gleichen Bezugszeichen versehen. Der wurzelzeichenförmige Kontaktstreifen 19 ist mit seinen Schenkeln 20 zwischen das Filtermedium 13 und das Stützrohr 16 eingesteckt. Die an die Schenkel 20 anschließenden Kontaktbereiche 21 verlaufen entlang der Stirnseite 14 des Filtermediums 13. Bei der Montage werden diese Kontaktbereiche 21 zwischen der Stirnseite 14 des Filtermediums 13, des Stützrohres 16, des Feinfiltermediums 17 sowie dem Innenrohr 18 und der zweiten Endkappe 12 eingeklemmt. Dadurch ist sowohl das Filtermedium 13, als auch das Stützrohr 16 mit der zweiten Endkappe 12 elektrisch kontaktiert, wodurch mehrere Kontaktflächen 24 gebildet werden. Die stirnseitige Verklebung der Filtermedien 13, 17 und Rohre 16, 18 mit der zweiten Endkappe 12 bewirkt einerseits eine dichtende Verbindung, und verhindert andererseits ein unkontrolliertes Trennen der Bauteile. Da der Klebstoff in der Klebezone möglicherweise eine Isolierung zwischen der Endkappe 12 und dem Kontaktstreifen 19 bildet, ist der Kontaktstreifen derart ausgeführt, dass er sowohl mit seinen Schenkeln 20 als auch mit seinem Kontaktbereich 21 über die Verklebung herausragt und so eine zuverlässige elektrische Verbindung schafft.

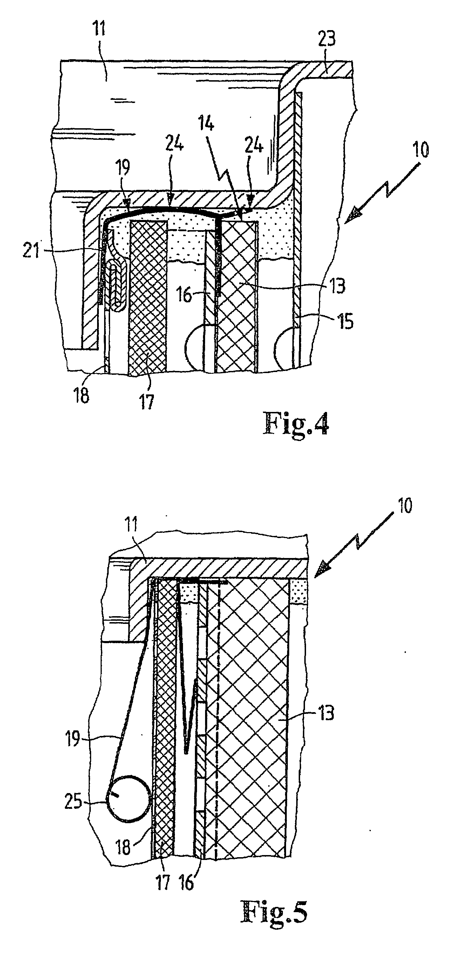

In Figur 4 ist ein Ausschnitt Y gemäß Figur 1 dargestellt. Der Figur 1 entsprechende Bauteile sind mit gleichen Bezugszeichen versehen. Die Verbindung der Filtermedien 13, 17 und der Rohre 16, 18 mit der ersten Endkappe 11 ist entsprechend der in Figur 3 beschriebenen Verbindung der zweiten Endkappe 12 ausgestaltet.

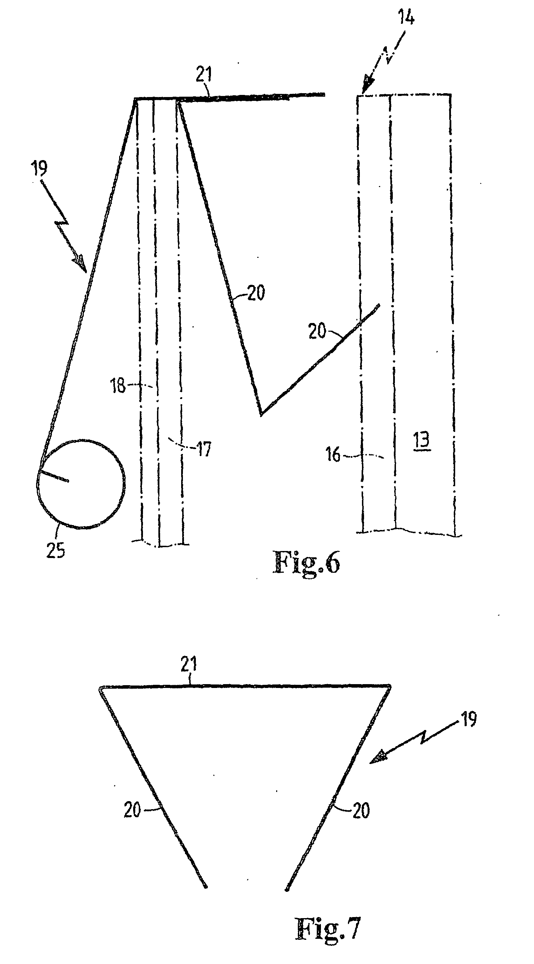

In Figur 5 ist ein Ausschnitt Y gemäß Figur 1 in einer Variante dargestellt. Der Figur 1 bzw. 4 entsprechende Bauteile sind mit gleichen Bezugszeichen versehen. Bei diesem Ausschnitt ist das Schutzrohr 15 nicht dargestellt. Der Unterschied zu der in Figur 4 dargestellten Variante besteht in der Ausgestaltung des Kontaktstreifens 19, welcher gemäß Figur 6 ausgebildet ist. Bei dieser Ausführung ist das Feinfiltermedium 17 und das Stützrohr 16 mit dem Kontaktstreifen 19 elektrisch leitend verbunden. Das Filtermedium 13 liegt flächig an dem Stützrohr 16 an, wodurch auch die elektrostatische Aufladung des Filterelementes 13 verhindert wird. Durch die Montage des Kontaktstreifens 19 in die Endkappe 11 und die Filtermedien 13, 17 bzw. Rohre 16, 18 ist der Kontaktstreifen etwas verformt. Der Kontaktstreifen 19 verfügt gemäß Figur 6 über winklig zueinander angeordnete Schenkel 20, welche zwischen das schematisch dargestellte Feinfiltermedium 17 und das ebenfalls schematisch dargestellte Stützrohr 16 ragen. An einen der Schenkel 20 schließt der Kontaktbereich 21 an, welcher teilweise entlang der Stirnseite 14 der Filtermedien 13, 17 bzw. Rohre 16, 18 verläuft. Der Kontaktbereich 21 ist abgewinkelt ausgebildet und besitzt an seinem abgewinkelten Bereich einen Abschluß 25, welcher als Kreis ausgebildet ist. Dieser Abschluß 25 verringert die Verletzungsgefahr bei der Montage, da keine scharfen Kanten hervorragen. Die Schenkel 20 verhaken sich bei dieser Ausführung in dem Stützrohr 16, wodurch der Kontaktstreifen 19 nach dem Aufstecken auf das Filtermedium 17 bzw. Stützrohr 16 bei der weiteren Montage nicht abrutschen kann.

In Figur 7 ist der Kontaktstreifen 19 in einer Variante im Schnitt dargestellt. Bei dieser Ausführung schließen die Schenkel 20 an den Kontaktbereich 21 an, wobei der Kontaktstreifen aus einem 7mm breiten Federstahlstreifen gefertigt ist. Die Schenkel 20 sind um 120°, bezogen auf den Federstahlstreifen nach oben gebogen. Dadurch ergibt sich die Form eines nach oben offenen Dreiecks. Bei der Montage werden die Schenkel 20 etwas aufgebogen und auf das Filtermedium bzw. Rohr (nicht dargestellt) montiert. Anschließend lässt man die Schenkel 20 wieder zusammenfedern, wodurch der Kontaktstreifen 19 sich selbst fixiert.

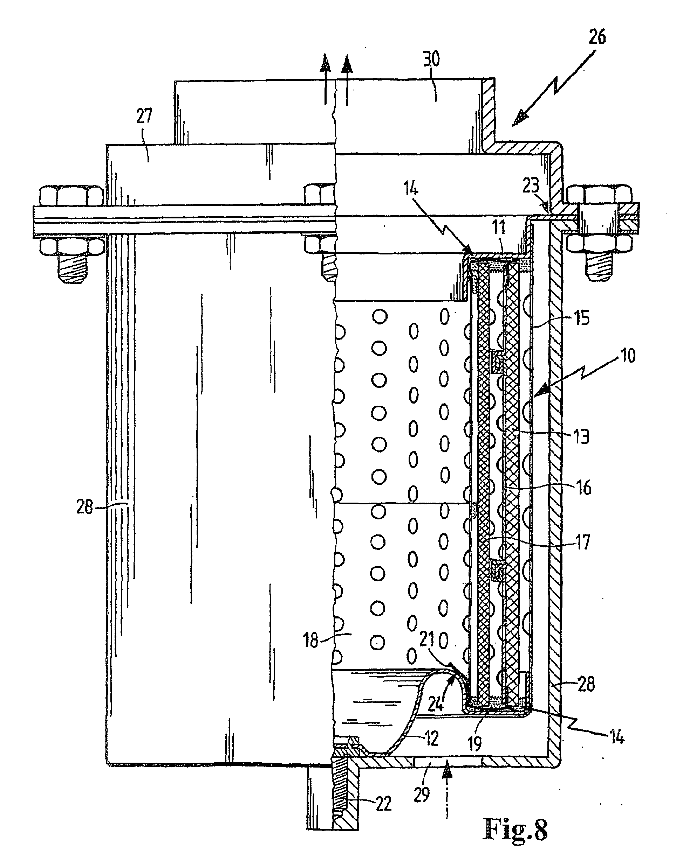

In Figur 8 ist eine Abscheidevorrichtung im Halbschnitt dargestellt. Der Figur 1 entsprechende Bauteile sind mit gleichen Bezugszeichen versehen. In die Abscheidevorrichtung ist ein Abscheider 10, wie er in den vorigen Figuren erläutert wurde, in ein Gehäuse 26 eingebracht. Das Gehäuse 26 verfügt über einen Deckel 27 und einen Topf 28. Der Deckel 27 ist mit dem Topf 28 verschraubt, wobei der Flanschbereich 23 der ersten Endkappe 11 zwischen den beiden Gehäuseteilen 27,28 verklemmt und ebenfalls verschraubt ist, wodurch die Endkappe 11 elektrisch leitfähig mit dem Gehäuse 26 kontaktiert ist. Der Abscheider 10 ist mit dem Befestigungsbolzen 22 der zweiten Endscheibe in den Topf 28 geschraubt, wodurch einerseits der Abscheider 10 spielfrei in dem Gehäuse 26 montiert ist und andererseits die zweite Endkappe 12 elektrisch leitfähig mit dem Gehäuse 26 kontaktiert ist. Bei diesem Ausführungsbeispiel verfügt der Topf 28 über einen Einlass 29, durch welchen das zu reinigende Fluid in das Gehäuse 26 einströmen kann. In dem Deckel 27 ist ein Auslass 30 angeordnet, durch welchen das gereinigte Fluid aus dem Gehäuse 26 ausströmen kann. Der Einlass 29 ist dichtend von dem Auslass 30 getrennt, da der Flanschbereich 23 der ersten Endkappe 11 dichtend zwischen den Gehäuseteilen 27, 28 angeordnet ist.

## Patentansprüche

1. Abscheider (10) zur Reinigung eines Fluidstromes, insbesondere zur Entölung eines Gasstromes, aufweisend ein Filtermedium (13), welches mit mindestens einer Endkappe (11, 12) verbunden ist,
- wobei das Filtermedium (13) zur Abscheidung von Verunreinigungen aus einem Fluidstrom vorgesehen ist,
- wobei die Endkappe (11, 12) elektrisch leitfähig ausgebildet ist,
wobei ein elektrisch leitfähiger Kontaktstreifen (19) vorgesehen ist, welcher sowohl mit dem Filtermedium (13), als auch mit der Endkappe (11, 12) elektrisch leitend verbunden ist, wobei der Kontaktstreifen (19) über Kontaktflächen verfügt, welche mit dem Filtermedium (13) und der Endkappe (11, 12) in flächigen, über mehrere mm² großen Kontakt stehen,
wobei ein Stützrohr (15, 16, 18) vorgesehen ist, welches durch den Kontaktstreifen (19) elektrisch leitend mit der Endkappe (11, 12) verbunden ist,
**dadurch gekennzeichnet, dass**
der Kontaktstreifen (19) über winklig zueinander angeordnete Schenkel (20) verfügt, die zwischen das Stützrohr (16) und das Filtermedium (13) gesteckt sind und die einen federnden Toleranzausgleich bewirken.

2. Abscheider (10) nach Anspruch 1, **dadurch gekennzeichnet, dass** das Filtermedium (13) über mehrere Filterlagen verfügt, welche mit dem Kontaktstreifen (19) verbunden sind.

3. Abscheider (10) nach einem der vorhergehenden Ansprüche, **dadurch gekennzeichnet, dass** der Kontaktstreifen (19) an mehreren Kontaktflächen (24) mit dem Filtermedium (13) und der Endkappe (11, 12) verbunden ist.

4. Abscheider (10) nach einem der vorangehenden Ansprüche, **dadurch gekennzeichnet, dass** der Kontaktstreifen (19) W-förmig ausgebildet ist, wobei das Filtermedium (13) zwischen den Schenkeln (20) eingeklemmt ist.

5. Abscheider (10) nach einem der Ansprüche 1 bis 3, **dadurch gekennzeichnet, dass** der Kontaktstreifen (19) wurzelzeichenförmig ausgebildet ist, wobei das Filtermedium (13) zwischen den Schenkeln (20) eingeklemmt ist.

6. Abscheider (10) nach einem der vorangehenden Ansprüche, **dadurch gekennzeichnet, dass** der Kontaktstreifen (19) über eine kreisringförmige Scheibe verfügt, wobei die Schenkel (20) aus der Scheibe herausragen.

7. Abscheidevorrichtung zur Reinigung eines Fluidstromes, aufweisend ein Gehäuse (26) mit einem Einlass (29) und einem Auslass (30), **dadurch gekennzeichnet, dass** ein Abscheider (10) gemäß einem der vorangehenden Ansprüche in das Gehäuse (26) integriert ist, wobei der Einlass (29) durch den Abscheider (10) dichtend von dem Auslass (30) getrennt ist.

8. Abscheidevorrichtung nach Anspruch 7, **dadurch gekennzeichnet, dass** das Gehäuse (26) elektrisch leitend mit der Endkappe (11, 12) verbunden ist.

## Claims

1. Separator for cleaning a fluid flow, in particular for deoiling a gas flow, featuring a filter medium (13) which is connected with at least one end cap (11, 12),
the filter medium (13) being provided for separating impurities from a fluid flow,
the end cap (11, 12) being electrically conductive,
an electrically conductive contact strip (19) being provided which is connected with the filter medium (13) as well as with the end cap (11, 12) in an electrically conductive manner, the contact strip (19) having contact areas which are in superficial contact with the filter medium (13) and the end cap (11, 12) via several sqmm large contacts,
a support tube (15, 16, 18) being provided which is connected via the contact strip (19) with the end cap (11, 12) in an electrically conductive manner,
**characterized in that**
the contact strip (19) has angularly arranged leg portions (20) which are inserted between the support tube (16) and the filter medium (13) and which ensure an elastic tolerance compensation.

2. Separator (10) according to claim 1, **characterized in that** the filter medium (13) has several filter layers which are connected with the contact strip (19).

3. Separator (10) according to one of the above-mentioned claims, **characterized in that** the contact strip (19) is connected with the filter medium (13) and the end cap (11, 12) at several contact areas (24).

4. Separator (10) according to one of the above-mentioned claims, **characterized in that** the contact strip (19) is W-shaped, the filter medium 13) being clamped between the leg portions (20).

5. Separator (10) according to one of the claims 1 to 3, **characterized in that** the contact strip (19) has the shape of a radical sign, the filter medium (13) being clamped between the leg portions (20).

6. Separator (10) according to one of the above-mentioned claims, **characterized in that** the contact strip (19) has a circular-shaped disk, the leg portions (20) protruding from the disk

7. Separation device for cleaning a fluid flow, featuring a housing (26) with an intake (29) and an outlet (30), **characterized in that** a separator (10) is, according to one of the above-mentioned claims, integrated in the housing (26), the intake (29) being sealingly separated from the outlet (30) by the separator (10).

8. Separation device according to claim 7, **characterized in that** the housing (26) is connected with the end cap (11, 12) in an electrically conductive manner.

## Revendications

1. Séparateur (10) pour le nettoyage d'un flux de fluide, en particulier pour le déshuilage d'un flux de gaz, présentant un milieu filtrant (13) qui est relié à au moins un capuchon terminal (11, 12),
le milieu filtrant (13) étant prévu pour la séparation d'impuretés d'un flux de fluide,
le capuchon terminal (11, 12) étant réalisé de manière électriquement conductrice,
une bande de contact électriquement conductrice (19) étant prévue, laquelle est reliée de manière électriquement conductrice à la fois au milieu filtrant (13) et au capuchon terminal (11, 12), la bande de contact (19) disposant de surfaces de contact qui ont un contact superficiel de plusieurs mm² avec le milieu filtrant (13) et le capuchon terminal (11, 12),
un tube de support (15, 16, 18) étant prévu, lequel est relié de manière électriquement conductrice par la bande de contact (19) au capuchon terminal (11, 12),
**caractérisé en ce que**
la bande de contact (19) dispose de branches (20) perpendiculaires les unes aux autres qui sont enfichées entre le tube de support (16) et le milieu filtrant (13) et ont un effet de compensation élastique des tolérances.

2. Séparateur (10) selon la revendication 1, **caractérisé en ce que** le milieu filtrant (13) dispose de plusieurs couches filtrantes qui sont reliées à la bande de contact (19).

3. Séparateur (10) selon l'une des revendications précédentes, **caractérisé en ce que** la bande de contact (19) est reliée sur plusieurs surfaces de contact (24) au milieu filtrant (13) et au capuchon terminal (11, 12).

4. Séparateur (10) selon l'une des revendications précédentes, **caractérisé en ce que** la bande de contact (19) est réalisée en forme de W, le milieu filtrant (13) étant coincé entre les branches (20).

5. Séparateur (10) selon l'une des revendications 1 à 3, **caractérisé en ce que** la bande de contact (19) est réalisée en forme de signe de racine, le milieu filtrant (13) étant coincé entre les branches (20).

6. Séparateur (10) selon l'une des revendications précédentes, **caractérisé en ce que** la bande de contact (19) dispose d'un disque en forme d'anneau de cercle, les branches (20) dépassant du disque.

7. Dispositif de séparation pour le nettoyage d'un flux de fluide, présentant un boîtier (26) avec une entrée (29) et une sortie (30), **caractérisé en ce qu'**un séparateur (10) est intégré au boîtier (26) conformément à l'une des revendications précédentes, l'entrée (29) étant séparée de manière étanche de la sortie (30) par le séparateur (10).

8. Dispositif de séparation selon la revendication 7, **caractérisé en ce que** le boîtier (26) est relié de manière électriquement conductrice au capuchon terminal (11, 12).
